# EUROPEAN PATENT APPLICATION

(11) **EP 4 484 793 A1**
(43) Date of publication of application: **01.01.2025**
(21) Application number: 23182124.0
(22) Date of filing: 28.06.2023
(51) Int. Cl.: F16G 11/10, B66D 3/04, F16G 15/08

(54) **MOUNT ASSEMBLY**

(71) Applicant: BAE SYSTEMS plc, London SW1Y 5AD (GB)
(72) Inventor: The designation of the inventor has not yet been filed
(74) Representative: BAE SYSTEMS plc Group IP Department

(57) **Abstract**

A mount assembly (100) for carrying and positioning an engagement unit (200) of a support unit (300) on an anchor (10). The mount assembly comprises a cradle (106) for receiving the engagement unit (200), and a coupling unit (120) comprising a coupling member (122) for coupling with an engagement element (202) provided on the engagement unit (200). The mount assembly (100) has a **first configuration** and a **second configuration.** In the **first configuration** the coupling unit (120) is operable to receive the engagement unit (200) into the cradle (106) and the coupling member (122) is in a **first position** in which it is engageable with the engagement element (202) of the engagement unit (200). In the **second configuration** the coupling member (122) is in a **second position** spaced apart from the **first position** to thereby draw the engagement element (202) towards the second end (104) to thereby lock the engagement unit (200) against the cradle (106).

## Description

### FIELD

The present disclosure relates to a mount assembly.

In particular the disclosure is concerned with a mount assembly for carrying and positioning an engagement unit of a support unit on an anchor.

### BACKGROUND

It is a requirement common to many industries to support and position heavy loads. For example, in manufacturing it may be necessary to lift parts of an assembly to move them into or out of position relative to another part of an assembly, for example to lift an engine from a vehicle body, or lift plates of metal from a delivery point to a machining station for it to be worked on.

The equipment used to do the lifting may be a hoist of some kind. A hoist is a device used for lifting or lowering a load, which may be manually operated, electrically or pneumatically driven. The hoist may be connected to an anchor, for example a mounting point on another structure (e.g. a building or scaffolding), which by necessity must be higher than the article to be lifted. Commonly the anchor may be several metres above working height, and hence to mount the hoist to the anchor a ladder, scaffolding or cherry picker type device must be deployed so a user can reach the mount point. All of these options pose a problem for a user as they may introduce unnecessary risk, delay and expense to the mounting of the hoist to the anchor. Although this may be acceptable in processes where the hoist may occupy a fixed position for a long time, in other examples it may be necessary to frequently move the hoist position, for example in assembly plants of large and/or bespoke equipment. This may be because the hoist needs to be moved out of position while other equipment or assemblies are moved past it, or because the hoist is needed at a different workstation position. Hence it is required that the hoist can be disengaged from the anchor so it may be connected to a different anchor.

Additionally, hoists are typically heavy pieces of equipment, so even if a user is able to use a ladder, scaffolding or cherry picker to get themselves into position, the act of carrying the hoist while connecting it to, or disconnecting it from, the anchor, may not be possible without putting a user at risk of injury.

Hence apparatus which enables a user to mount equipment to a high anchor point (for example at a height above themselves), or dismount equipment from a high anchor point, without needing to use a ladder, scaffolding or cherry picker type device to get close to the anchor, and/or which avoids the need for the user to personally support or carry the weight of the equipment at any point in the mounting/dismounting process, is highly desirable.

### SUMMARY

According to the present disclosure there is provided an apparatus, system and method as set forth in the appended claims. Other features of the invention will be apparent from the dependent claims, and the description which follows.

Accordingly there may be provided a mount assembly (100) for carrying and positioning an engagement unit (200) of a support unit (300) on an anchor (10). The mount assembly (100) may extend between a first end (102) and a second end (104) along an operational axis (20), the first end (102) spaced apart from the second end (104) along the operational axis (20). A cradle (106) may be provided at the first end (102) for receiving the engagement unit (200). A coupling unit (120) comprising a coupling member (122) for coupling with an engagement element (202) may be provided on the engagement unit (200). The mount assembly (100) may have a **first configuration** and a **second configuration.** In the **first configuration** the coupling unit (120) may be operable to receive the engagement unit (200) into the cradle (106) and the coupling member (122) is in a **first position** in which it is engageable with the engagement element (202) of the engagement unit (200). In the **second configuration** the coupling member (122) may be in a **second position** spaced apart from the **first position** in a first direction (D1) along the operational axis (20) to thereby draw the engagement element (202) in the first direction (D1) along the operational axis (20) towards the second end (104) to thereby lock the engagement unit (200) against the cradle (106).

The mount assembly (100) may have a **third configuration** in which the coupling unit (120) is operable to release the engagement unit (200) from the cradle (106) and the coupling member (122) is at a **third position** spaced apart from the **first position** in a second direction (D2) along the operational axis (20) such that the coupling unit (120) is dis-engageable from the engagement element (202) of the engagement unit (200), the **first position** being between the **second position** and the **third position.**

The mount assembly (100) may further comprise an actuator (130), the actuator (130) configured to control the coupling unit (120) to switch between the **different configurations.**

The coupling member (122) may be a hook member (124) configured for coupling with the engagement element (202) provided on the engagement unit (200).

The mount assembly (100) may further comprise an arm (140) which extends from the coupling unit (120) towards the second end (104) along the operational axis (20).

The mount assembly (100) may further comprise an actuator controller (150) provided on the arm (140), the actuator controller (150) operable to operate the actuator (130) to control the coupling unit (120) to switch between the **different configurations.**

The arm (140) may be extendable and retractable.

The actuator (130) may comprise a cable adjuster unit (132) and a lever handle (134) coupled to the cable adjuster unit (132). A first control cable (136) and a second control cable (138) may extend from the cable adjuster unit (132) to the coupling unit (120). The first control cable (136) and the second control cable (138) may be coupled to the coupling member (122) such that when the lever handle (134) is in a **first orientation** the mount assembly (100) is in the **first configuration,** when the lever handle (134) is in a **second orientation** the mount assembly (100) is in the **second configuration,** and when the lever handle (134) is in a **third orientation** the mount assembly (100) is in **third configuration.**

The coupling member (122) may be mounted in the coupling unit (120) such that it is moveable along a predefined path along the operational axis (20) between the **first position** and the **second position.**

The coupling member (122) may be mounted in the coupling unit (120) such that it is moveable along a predefined path along the operational axis (20) between the **first position** and the **third position.**

The engagement unit (200) may comprise a latch (204) which has an **open configuration** and a **closed configuration.**

The engagement element (202) of the engagement unit (200) may be a wire (206) which is coupled to the latch (204).

The latch (204) may be configured such that when the mount assembly (100) is in the **second configuration** the latch (204) is in the **open configuration** to enable the engagement unit (200) to be engaged with the anchor (10) or to be dis-engaged from the anchor (10), and when the mount assembly (100) is in the **third configuration** the latch (204) is in the **closed configuration** to prevent the engagement unit (200) being dis-engaged with the anchor (10).

The latch (204) may be biased to the **closed configuration.**

The coupling unit (120) may comprise a shuttle (126) from which extends a locking member (128), the coupling unit (120) defining a recess (160) for locking engagement with the locking member (128). The shuttle (126) may be constrained to move along a guide path (162) in a direction parallel to the operational axis (20) towards and away from the recess (160). The locking member (128) may be being engageable with the recess (160). The shuttle (126) may be coupled to the coupling member (122) such that when the locking member (128) of the shuttle (126) is engaged with the recess (160) the coupling member (122) is operable to be moved to the **second position.** When the mount assembly (100) is in the **first configuration,** the shuttle (126) may be spaced apart from the recess (160) along the guide path (162).

There may also be provided a method of operation of a mount assembly (100) according to the present disclosure comprising the steps of:
setting the mount assembly (100) to the **first configuration;**
locating the engagement unit (200) into the cradle (106);
coupling the engagement element (202) provided on the engagement unit (200) with the coupling member (122);
setting the mount assembly (100) to the **second configuration** to thereby draw the engagement element (202) in the first direction along the operational axis (20) towards the second end (104) to thereby:
   a. lock the engagement unit (200) against the cradle (106); and
   b. fix the latch (204) in the open configuration;
engaging the engagement unit (200) with the anchor (10);
setting the mount assembly (100) to the **third configuration** to release the engagement element (202) from the coupling member (122) to thereby:
   c. release the engagement unit (200) from the cradle (106); and
   d. return the latch (204) to the closed configuration.

The method may further comprise the steps of the locking member (128) being engaged with the recess (160); and the coupling member (122) being moved to the **second position.**

There may be provided a support unit (300) comprising a shackle unit (700) provided with an anchor coupling (702) for coupling with an anchor (10), a support member engagement feature (704), and a housing (706) which defines a tether guide feature (228).

The support unit (300) may further comprise a support member (400) provided with a shackle unit engagement feature (402), and an apparatus coupling (404) configured for coupling with an apparatus (500) to be supported from the support unit (300).

The support unit (300) may further comprise a tether (600) which extends from a free end (602) through the tether guide feature (228) through the shackle unit housing (706) to the support member (400).

The support unit (300) operable to have a **disengaged configuration** in which the support member (400) and the shackle unit (700) are disengaged from one another; and an **engaged configuration** in which the support member (400) is locked to the shackle unit (700).

The guide feature (228) may be configured such that when the support unit (300) is in the **disengaged configuration** and the free end (602) of the tether (600) is drawn away from the guide feature (228), the support member (400) is drawn into engagement with, and locked to, the shackle unit (700) such that the support unit (300) is in the **engaged configuration.**

The guide feature (228) may further comprise a roller (230), the tether (600) engaged with the roller (230).

The support member engagement feature (704) of the shackle unit housing (706) may be defined by a support member receiving passage (708) having an opening (710) configured for receiving the support member (400) when the support unit (300) is in the **engaged configuration.**

The support unit (300) may further comprise a locking mechanism (310) which comprises: a locking lever (328) pivotably mounted on and biased to pivot into the support member receiving passage (708); a locking lever engagement feature (428) provided on the support member (400); the locking mechanism (310) operable such that the locking lever (328) engages with the locking lever engagement feature (428) when the support member (400) extends along the support member receiving passage (708) to thereby prevent the support member (400) from being disengaged and removed from the shackle unit housing (706).

The shackle unit engagement feature (402) may define a leading edge (410) of the support member (400), which extends from a point and increases in diameter along a part of the length of the support member (400) towards the apparatus coupling (404), and then reduces in diameter to define provide a shoulder (408) which defines the locking lever engagement feature (428).

A stop feature (712) may be provided in the shackle unit housing (706) to engage with the support member (400) and may be positioned such that it engages with the support member (400) when the support member (400) has travelled along the support member receiving passage (708) at least as far as is required to engage with the locking lever (328).

The locking mechanism (310) may comprise a release mechanism (312) operable to pivot the locking lever (328) away from engagement with the locking lever engagement feature (428) provided on the support member (400).

The locking lever (328) may be pivotably mounted to the shackle unit housing (706) at a pivot point (714). The locking lever (328) may comprise: a first end part (330), on one side of the pivot point (714), for engagement with the locking lever engagement feature (428) provided on the support member (400), and a second end part (332), on the other side of the pivot point (714), that extends radially outwards of the shackle unit housing (706), the release mechanism (312) being mounted and operable to act on the second end part (332) of the locking lever (328) to pivot the locking lever (328) away from engagement with the locking lever engagement feature (428) provided on the support member (400).

A brake unit (800) may be provided on the shackle unit housing (706) to engage with the tether (600), the brake unit (800) configured to engage with the tether (600) if tension in the tether (600) between the brake unit (800) and the free end (602) of the tether (600) is below a predetermined value and/or the free end (602) of the tether (600) is released.

The brake unit (800) may be provided as a drop catch mechanism (900) which defines: a tapered passage (902) through which the tether (600) extends; a catch member (904) mounted in, and moveable along, a slot (906) which extends along the tapered passage (902); the tether (600) being located between the catch member (904) and a wall (910) of the tapered passage (902); the drop catch mechanism (900) configured such that: if the tension in the tether (600) is sufficient to maintain a distance between the catch member (904) and the tether (600), then the tether (600) is free to travel past the catch member (904); and if the tension in the tether (600) is below a predetermined value and/or the free end (602) of the tether (600) is released, the tether (600) will engage with the catch member (904) to draw it along the tapered passage (902) with the tether (600) locked against the wall of the drop catch mechanism (900) to thereby lock the tether (600) against the wall (910) of the drop catch mechanism (900).

The tether guide feature (228), the brake unit (800) and the free end (602) of the tether (600) may be provided in series.

Hence there is provided apparatus which enables a user to mount equipment to a high anchor point (for example at a height above themselves), or dismount equipment from a high anchor point, without needing to use a ladder, scaffolding or cherry picker type device to get close to the anchor, and/or which avoids the need for the user to personally support or carry the weight of the equipment at any point in the mounting/dismounting process.

### BRIEF DESCRIPTION OF THE FIGURES

Embodiments of the invention will now be described by way of example only with reference to the figures, in which:
Figures 1, 2 show different views of part of a mount assembly according to the present disclosure when in a **first configuration** between **a second configuration** and **a third configuration;**
Figures 3, 4 show different views of part of the mount assembly when in the **second configuration;**
Figure 5 shows a side view of the part of the mount assembly shown in figures 1 to 4 in the **second configuration,** with part of the housing removed, and carrying an engagement unit of a support unit;
Figure 6 shows the same view as figure 5 with a complete housing;
Figure 7 shows internal features of the part of the mount assembly shown in figures 1 to 6 in the **third configuration;**
Figure 8 shows a further part of the mount assembly, not shown in in figures 1 to 7;
Figures 9 to 14 illustrate the method of operation of the mount assembly of figures 1 to 8;
Figures 15 to 18 shows different views of a support unit according to the present disclosure;
Figures 19, 20, figures 21, 22, figures 23, 24, figures 25, 26 and figures 27, 28 illustrate the method of operation of the support unit shown in figures 15 to 18; and
Figure 29 illustrates a part of the mount assembly.

### DETAILED DESCRIPTION

The present disclosure relates to a support unit 300 and mount assembly 100 for carrying and positioning an engagement unit 200 of a support unit 300 on an anchor 10.

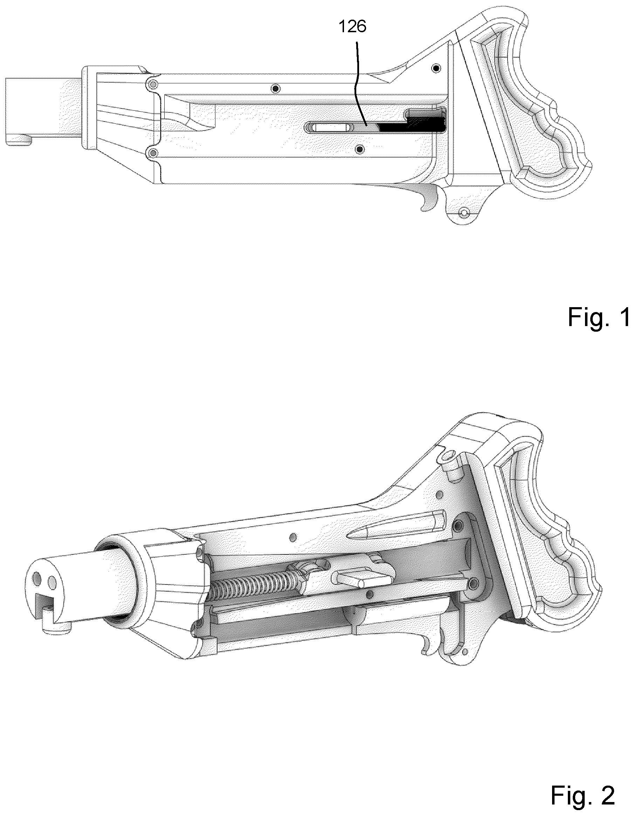

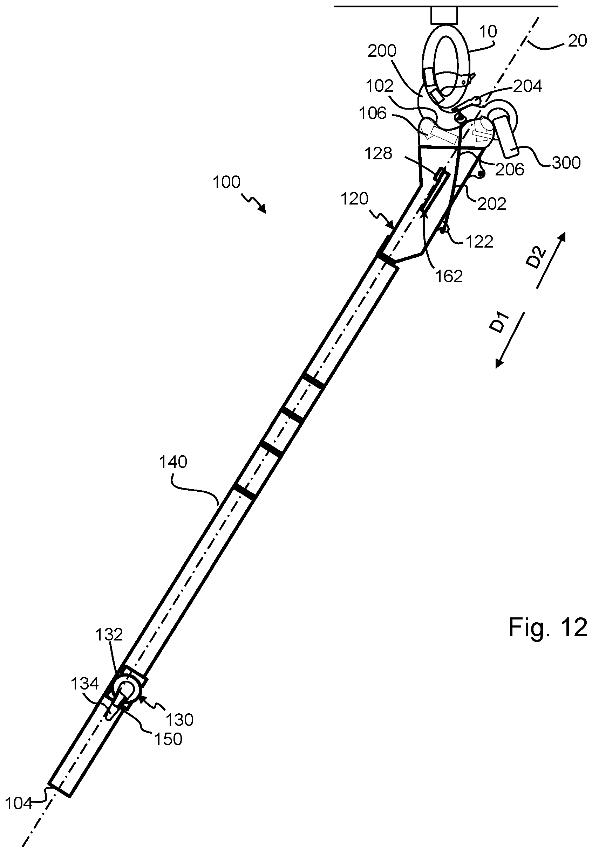

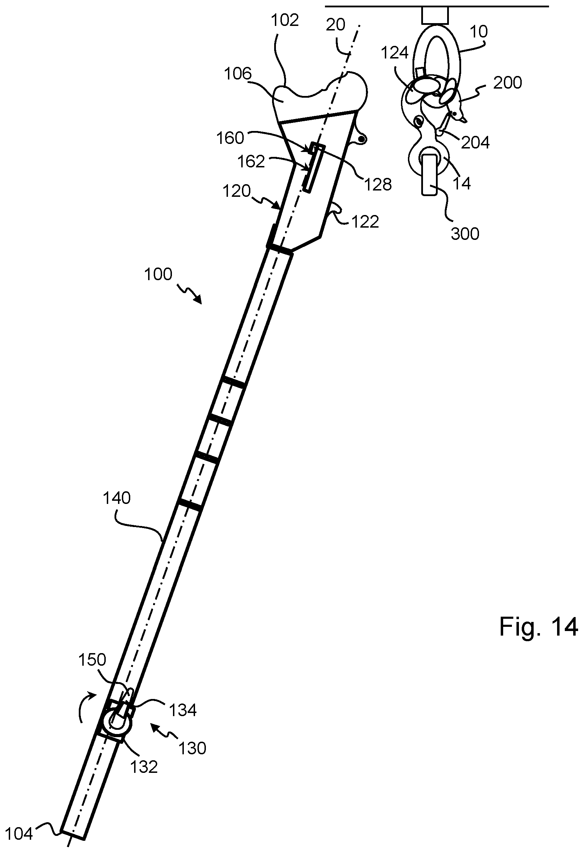

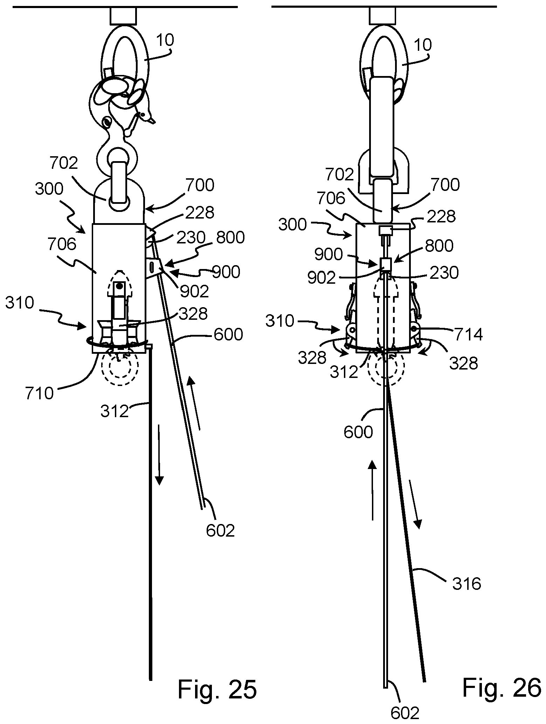

Figures 1 to 14 illustrate a mount assembly 100 for carrying and positioning an engagement unit 200 on an anchor 10. As illustrated in the figures, the engagement unit 200 may be provided as a hook. The anchor 10 may be provided as any suitable coupling member to a support structure, an example of which is shown in figures 12 to 14 and figures 19 to 28 as a ring.

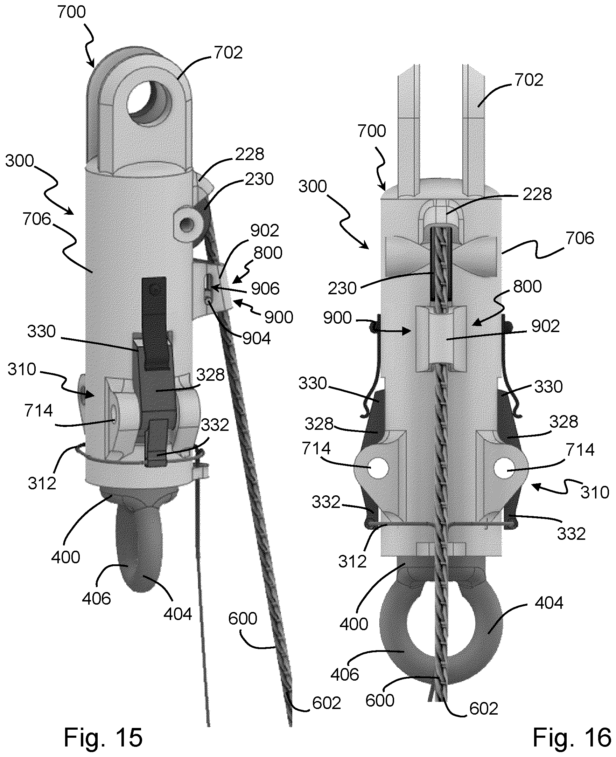

Figures 15 to 29 illustrate an example of a support unit 300 which may be coupled to the engagement unit 200. Hence the mount assembly 100 may be configured for carrying and positioning an engagement unit 200 of a support unit 300 on an anchor 10.

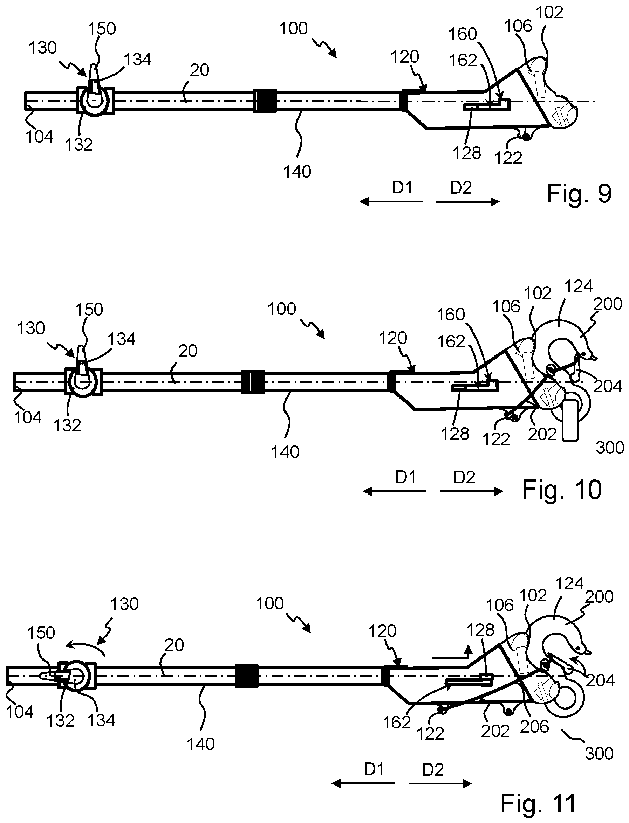

An example of the mount assembly 100 is shown in figures 9 to 14. In this example the mount assembly 100 extends between a first end 102 and a second end 104 along an operational axis 20. The first end 102 of the mount assembly 100 is spaced apart from the second end 104 of the mount assembly 100 along the operational axis 20.

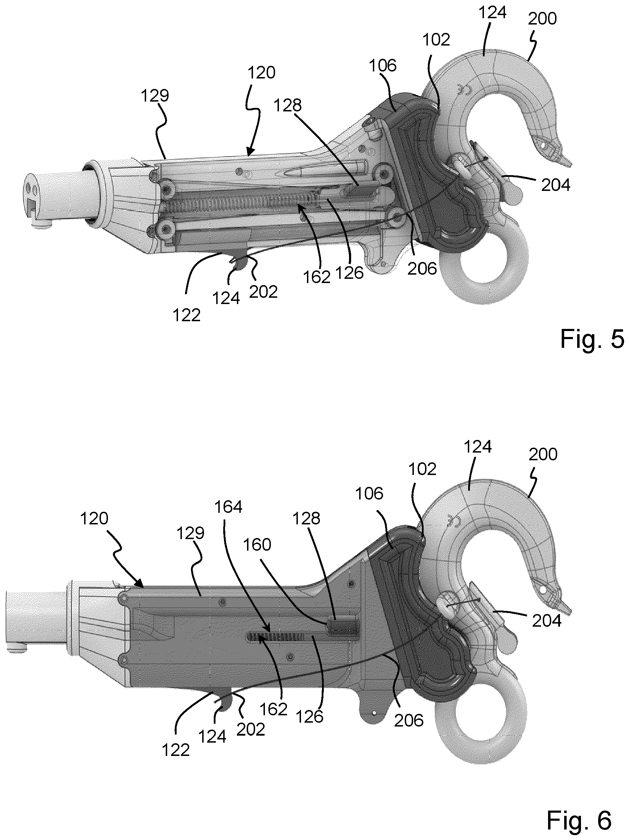

A cradle 106 (shown in detail in figures 1 to 7) is provided at the first end 102 of the mount assembly 100. The cradle 106 is configured for receiving an engagement unit 200 (e.g. hook), as illustrated in figures 5, 6 and figures 10 to 13.

The mount assembly 100 further comprises a coupling unit 120 (shown in detail in figures 1 to 7). In the example shown the cradle 106 is mounted to one end of the coupling unit 120. That is to say, in the example shown, the coupling unit 120 extends from the cradle 106 in a direction towards the second end 104 of the mount assembly 100.

The coupling unit 120 is provided with a coupling member 122 for coupling with an engagement element 202 provided on the engagement unit 200. In the example shown the engagement element 202 is provided as a wire 206. In other examples, not shown, the engagement element 202 may be provided as an engagement feature of any suitable type for releasably coupling the coupling unit 120 and the engagement unit 200.

As shown in the figures, the coupling member 122 may be a hook member 124 configured for releasably coupling with the engagement element 202 (e.g. wire 206) provided on the engagement unit 200 (e.g. hook).

The mount assembly 100 has a **first configuration,** a **second configuration** and a **third configuration.**

In the **first configuration** (as shown in figures 1, 2, 9, 10, the coupling unit 120 is operable to receive the engagement unit 200 into the cradle 106 and the coupling member 122 is in a **first position** in which it is engageable with the engagement element 202 (e.g. wire 206) of the engagement unit 200 (e.g. hook). With the mount assembly in the **first configuration** (ie the coupling member in the **first position)** the engagement unit 200 may be fitted by hand to the cradle 106.

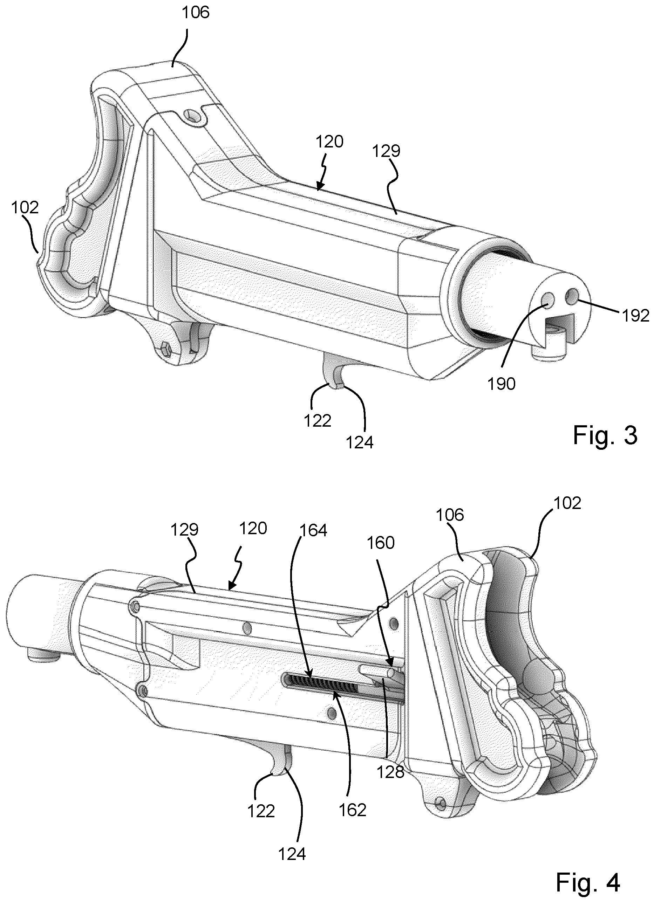

In the **second configuration** (as shown in figures 3, 4, 5, 6, 11, 12), the coupling member 122 is in a **second position.** The **second position** is spaced apart from the **first position** in a first direction D1 along the operational axis 20 to thereby draw the engagement element 202 (e.g. wire 206) in a direction along the operational axis 20 towards the second end 104 of the mount assembly 100 (and hence away from the first end 102 of the mount assembly 100) to thereby lock the engagement unit 200 (e.g. hook) against the cradle 106. Hence the first direction D1 is in a direction away from the first end 102 towards the second end 104.

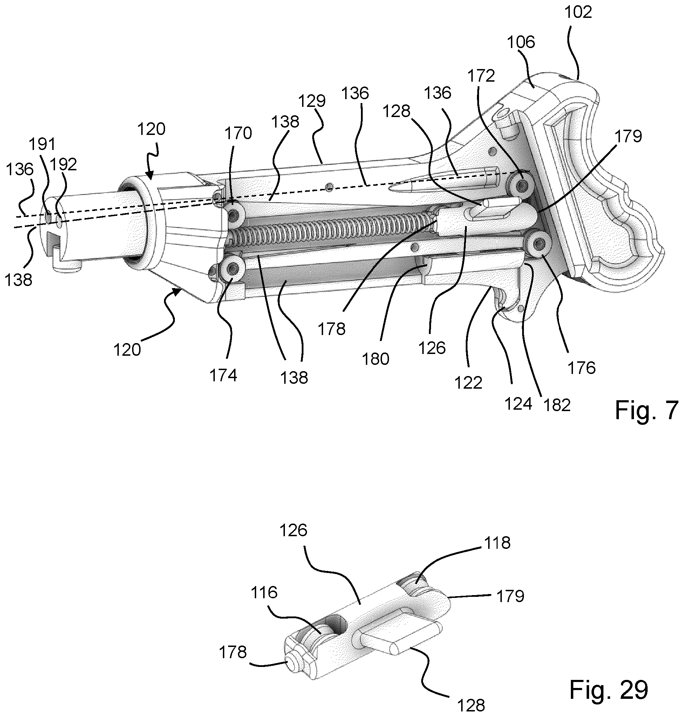

In the **third configuration** (as shown in figures 7, 13, 14) the coupling member 122 is at a **third position** spaced apart from the **first position** in a second direction D2 along the operational axis 20 such that the coupling unit 120 is dis-engageable from the engagement element 202 of the engagement unit 200.

The second direction D2 is in a direction away from the second end 104 towards the first end 102. Hence the **first position** is between the **second position** and the **third position.**

Due to the position of the coupling member 122 in the **third configuration** (as shown in figures 7, 13, 14) the coupling unit 120 is operable to release the engagement unit 200 from the cradle 106 and the coupling member 122.

The coupling member 122 may be mounted in the coupling unit 120 such that it is moveable along a predefined path along the operational axis 20 between the **first position** and the **second position.** The predefined path along the operational axis 20 may be linear.

The coupling member 122 may be mounted in the coupling unit 120 such that it is moveable along a predefined path along the operational axis 20 between the **first position** and the **third position.**

As shown in figures 5, 6, 10 to 14, the engagement unit 200 may comprise a latch 204 which has an **open configuration** and a **closed configuration.** That is to say, the engagement unit 200 comprises an opening, or latch space, which is spanned by the latch 204 in the closed configuration. The latch 204 may be biased to the **closed configuration,** for example by a spring member.

As shown in the figures, the engagement element 202 (e.g. wire 206) of the engagement unit 200 (e.g. hook) may be coupled to the latch 204.

The latch 204 may be configured such that when the mount assembly 100 is in the **second configuration** the latch 204 is in the **open configuration** (as shown in figures 5, 6, 11, 12) to enable the engagement unit 200 to be engaged with the anchor 10 or to be dis-engaged from the anchor 10.

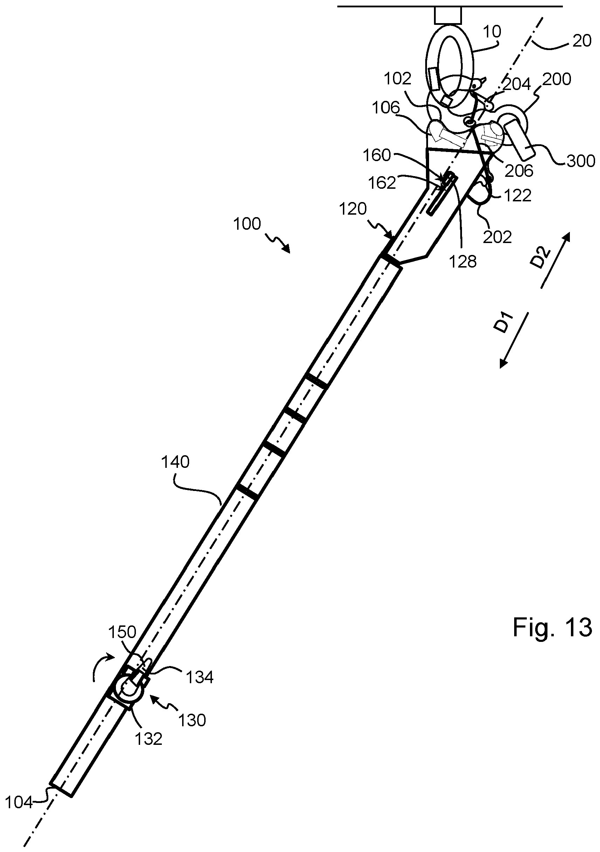

When the mount assembly 100 is in the **third configuration** the latch 204 is in the **closed configuration** (as shown in figures 10, 13) to prevent the engagement unit 200 being dis-engaged with the anchor 10.

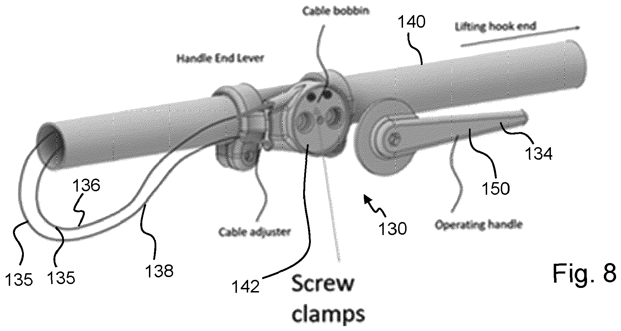

The mount assembly 100 may further comprise an actuator 130. A part exploded view of an actuator 130 is shown in figure 8, and as assembled in figures 9 to 14. The actuator 130 is configured to control the coupling unit 120 so that the coupling member 122 moves between the **first position,** the **second position** and the **third position** to switch the mount assembly 100 between the **first configuration,** the **second configuration** and the **third configuration.**

As shown in part in figure 8, and in full in figures 9 to 14, the mount assembly 100 may further comprise an arm 140 which extends from the coupling unit 120 towards the second end 104 of the mount assembly along the operational axis 20. The arm 140 may be extendable and retractable. That is to say, the arm 140 may be operable to increase and decrease in length along the operational axis 20. Put another way, the arm 140 may be telescopic.

The mount assembly 100 may further comprise an actuator controller 150 provided on the arm 140. The actuator controller 150 may be provided towards the second end 104 of the mount assembly 100. The actuator controller 150 is operable to operate the actuator 130 to control the coupling unit 120 to switch the coupling member 122 between the **first configuration,** the **second configuration** and the **third configuration.**

The actuator 130 may comprise a cable adjuster unit 132 and a lever handle 134 coupled to the cable adjuster unit 132. As illustrated in the examples of figures 7, 8, a first control cable 136 and a second control cable 138 extend from the cable adjuster unit 132 to the coupling unit 120.

The cable adjuster unit 132 may comprise a spool 142 coupled to the handle 134. An end of the first control cable 136 and an end of the second control cable 138 are attached (for example by screw clamps) to the spool 142. The first control cable 136 and the second control cable 138 are each provided in, and slideable relative to, a sheath 135. Hence rotation of the spool 142 causes each control cable 136, 138 to move along its respective sheath 135. The first control cable 136 and the second control cable 138 are mounted to the spool 142 in different locations (for example diametrically opposite one another across the diameter of the spool 142) such that rotation of the spool 142 in one direction (e.g. moving the lever handle 134 to a **first orientation**) will draw on the first control cable 136 back onto the spool 142 while urging the second control cable 138 off the spool 142, and such that that rotation of the spool 142 in an opposite direction (e.g. moving the lever handle 134 to a **second orientation**) will urge the first control cable 136 off the spool 142 while drawing the second control cable 138 onto the spool 142. By way of example, the **first orientation** of the lever handle 134 is shown in figures 9, 10, 13, 14, and the **second orientation** of the lever 134 handle is shown in figures 11, 12.

As shown in figure 3, the first control cable 136 and second control cable 138 are coupled, directly or indirectly, to the coupling member 122 such that when the lever handle 134 is in the **first orientation** the mount assembly 100 is in the **first configuration** and the coupling member 122 is in the **first position,** when the lever handle 134 is in the **second orientation** the mount assembly 100 is in the **second configuration** and the coupling member 122 in the **second position,** and when the lever handle 134 is in a **third orientation** the mount assembly 100 is in **third configuration** and the coupling member 122 is in the **third position.**

The coupling unit 120 may comprise a housing 129 which in which the moving parts of the coupling unit 120 are retained. In figures 3, 5 part of the housing 129 is shown removed to illustrate interior detail of the coupling unit 120.

As shown in figures 5, 7, the coupling unit 120 comprises a shuttle 126 from which extends a locking member 128. The first control cable 136 is fitted to a first end 179 of the shuttle 126 and the second control cable 128 is fitted to a second end 178 of the shuttle 126. Additionally the first control cable 136 is fitted to a first end 182 of the coupling member 122 and the second control cable 128 is fitted to a second end 180 of the coupling member 122. Hence the shuttle 126 is coupled to the coupling member 122.

The first control cable 136 extends through a first passage 190 defined in the coupling unit housing 129 to a first roller 172, then to the first end 179 of the shuttle 126, then to a second roller 176 and then to the first end 182 of the coupling member 122. The first control cable 136 is slideable relative to where it is coupled to the first end 179 of the shuttle 126.

The second control cable 138 extends through a second passage 192 defined in the coupling unit housing 129 to a third roller 170, then to the second end 178 of the shuttle 126, then to a fourth roller 174 and then to the second end 180 of the coupling member 122. The second control cable 138 is slideable relative to where it is coupled to the second end 178 of the shuttle 126.

The first roller 172 and the second roller 176 are located towards the first end 102 of the coupling unit housing 129, spaced apart from one another across the guide path 162.

The third roller 170 and the fourth roller 174 are spaced apart from first roller 172 and the second roller 176 in the first direction D1 along the guide path 162. The third roller 170 and the fourth roller 174 are spaced apart from one another across the guide path 162.

As shown in figure 29, the first end of 179 of the shuttle 126 may comprise a fifth roller 118 which the first control cable 136 is engaged with, may move relative to along the surface of, and is trapped by to thereby couple the shuttle 126 to the first control cable 136. That is to say, the first control cable 136 may be threaded through a gap between the shuttle 126 and the fifth roller 118.

As shown in figure 29, the second end of 178 of the shuttle 126 may comprise a sixth roller 116 which the second control cable 138 is engaged with, may move relative to along the surface of, and is trapped by to thereby couple the shuttle 126 to the second control cable 138. That is to say, the second control cable 138 may be threaded through a gap between the shuttle 126 and the sixth roller 116.

The routing of the first control cable 136 and the second control cable 138 past their respective rollers and ends of the shuttle 126 is configured such that movement of the first control cable 136 and the second control cable 138 will result in the movement of the coupling member 122 relative to the coupling unit 120.

The routing of the first control cable 136 and the second control cable 138 past their respective rollers and ends of the shuttle 126 is configured such that movement of the shuttle 126 will result in the movement of the coupling member 122 relative to the coupling unit 120.

Hence the coupling member 122 may be moved from the **first position** to the **second position** by use of the actuator controller 150 to move the first control cable 136 and the second control cable 138 and/or by movement of the shuttle 126.

The housing 129 defines a recess 160 for locking engagement with the locking member 128 of the shuttle 126.

In the example shown the shuttle 126 is constrained to move along a guide path 162 in a direction parallel to the operational axis 20 towards and away from the recess 160. the locking member 128 is engageable with the recess 160 (as shown in figures 6, 7, 11, 12). The coupling of the shuttle 126 to the coupling member 122 using the first control cable 136, second control cable 138 arrangement of rollers described above and shown in the figures is such that when the locking member 128 of the shuttle 126 is engaged with the recess 160 the coupling member 122 is operable to be moved to the **second position.**

Hence the locking member (128) does not act to lock the coupling member 122 in the **second position,** but allows for full loading to be applied through the actuator 130 via the control cables 136, 138.

In the example shown the guide path 162 is defined as a slot 164 in the housing 129, and the locking member 128 may extend through the slot 164. The guide path 162 is defined by the housing 129. The guide path 162 may be provided as a passage in which the shuttle 126 is located and is operable to move along.

The shuttle 126 may be biased towards a position spaced apart from the recess 160 along the guide path 162, for example by a spring member. The shuttle 126 may be biased towards a position in which the coupling member 122 is in the **first position** and the mount assembly 100 is in the **first configuration.**

When the mount assembly 100 is in the **first configuration,** the shuttle 126 is spaced apart from the recess 160 along the guide path 162 (as shown in figures 1, 2), 9, 10).

When the mount assembly 100 is in the **second configuration** and the **third configuration** the locking member 128 of the shuttle 126 is located in the recess 160. During use, the locking member 128 is located in the recess by the user (e.g. by hand operation of the locking member 128).

An example of a support unit 300 according to the present disclosure is shown in figures 13 to 26. The support unit 300 may be coupled to and/or comprise an engagement unit 200 (e.g. hook).
As shown in figures 13 to 26, the support unit 300 may comprise a shackle unit 700. In the examples shown, the shackle unit 700 is coupled to the engagement unit 200. The shackle unit 700 is provided with an anchor coupling 702 (e.g. a ring or hook) for coupling directly with an anchor 10 or, as shown in the examples, for coupling indirectly with an anchor 10 via an engagement unit 200.

The shackle unit 700 is provided with a support member engagement feature 704. The shackle unit 700 is further provided with a housing 706 which defines a tether guide feature 228.

The shackle unit 700 further comprises a support member 400. The support member 400 may be provided as a mandrel.

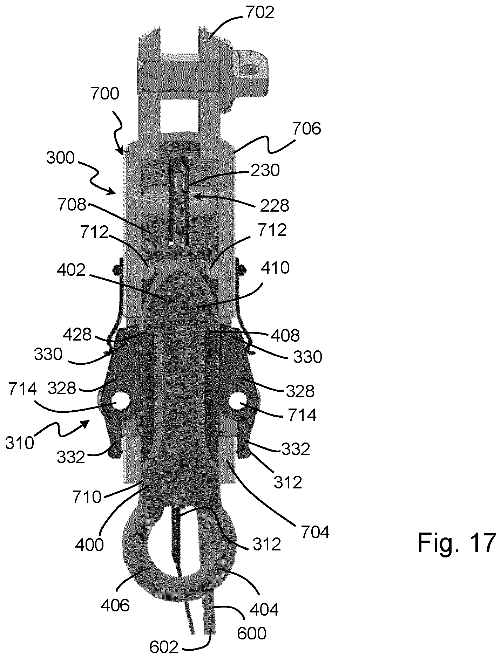

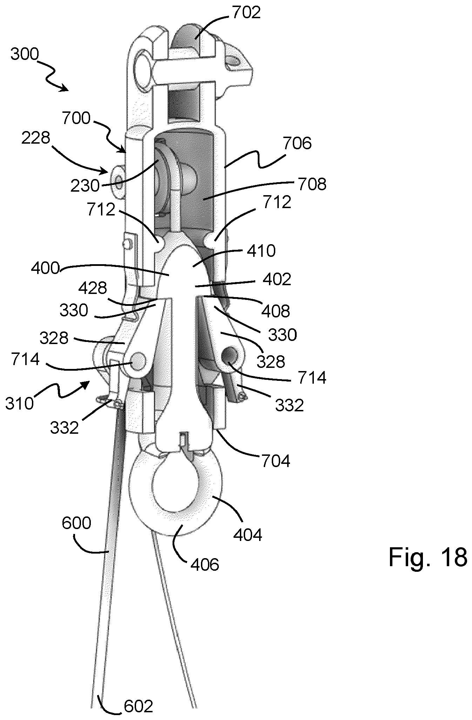

The support member 400 may be provided with an shackle unit engagement feature 402 which defines a leading edge 410 of the support member 400. The support member 400 may further be provided with an apparatus coupling 404 which defines a trailing edge 406 of the support member 400. The apparatus coupling 404 may be configured for coupling with an apparatus 500 to be supported from the support unit 300. For example the apparatus coupling 404 may be configured for coupling with an apparatus 500 to be supported from the support unit 300. A diagrammatic representation of an apparatus 500 is shown in figures 17, 18.

The support unit 300 further comprises a tether 600 which extends from a free end 602 of the tether 600 (e.g. a user handling end) through the tether guide feature 228 in the shackle unit housing 706 to the shackle unit engagement feature 402 of the support member 400.

The support unit 300 is operable to have a **disengaged configuration** (as shown in figures 15, 17, 18, 19, 20, 25, 26) in which the support member 400 and the shackle unit 700 are disengaged (i.e. unlocked) from one another. Hence in the **disengaged configuration** the support member 400 is spaced apart from, and movable relative to, the shackle unit 700, albeit still connected by the tether 600. Hence in the **disengaged configuration** the support member 400 can be drawn towards the shackle unit 700 or drawn away from the shackle unit 700. Hence in the **disengaged configuration** anything attached to the support member 400 (for example a hoist or other apparatus 500) can be raised up to, or lowered down from, where the shackle unit 700 is mounted from an anchor 10 using the tether 600.

The support unit 300 is operable to have an **engaged configuration** in which the support member 400 is locked (e.g. fixed, coupled) to the shackle unit 700.

Hence in the **engaged configuration** the support member 400 and the shackle unit 700 are coupled together so that, with the shackle unit 700 coupled to, and hence supported from, an anchor 10, the support member 400 (and hence any apparatus 500 attached thereto) is likewise carried/supported by the anchor 10.

The shackle unit housing 706 defines a support member receiving passage 708 having an opening 710 configured for receiving the support member 400 when the support unit 300 is in the **engaged configuration.** That is to say, the support member receiving passage 708 and the opening 710 may define the support member engagement feature 704 of the shackle unit 700.

The guide feature 228 is configured such that when the support unit 300 is in the **disengaged configuration** and the free end 602 of the tether 600 is drawn away from the guide feature 228, the support member 400 is drawn into engagement with, and locked to, the shackle unit 700 such that the support unit 300 is in the **engaged configuration.**

That is to say, the guide feature 228 is configured such that when the free end 602 of the tether 600 is drawn away from the guide feature 228 when the support unit 300 is in the **disengaged configuration,** the support member 400 is drawn into engagement with, and locked to, the shackle unit 700 such that the support unit 300 is in the **engaged configuration.**

The guide feature 228 may further comprise a roller 230, the tether 600 being engaged with the roller 230 so that the roller 230 rotates as the tether 600 is drawn past the roller 230.

As best shown in figures 13 to 16, the support unit 300 may further comprise a locking mechanism 310. The locking mechanism 310 may comprise a locking lever 328 (e.g. a pawl) pivotably mounted on the shackle unit housing 706 and biased to pivot into, and hence extend into, the support member receiving passage 708. The locking mechanism 310 may further comprise a locking lever engagement feature 428 provided on the support member 400.

The locking mechanism 310 is operable such that the locking lever 328 engages with the locking lever engagement feature 428 when the support member 400 extends sufficiently far along the support member receiving passage 708 to thereby prevent the support member 400 from being disengaged and removed from the shackle unit housing 706 (for example as shown in figure 16).

The locking mechanism 310 may comprise two or more locking levers 328, spaced apart around the circumference of the shackle unit housing 706, each configured to operate in the same way and to engage with the locking lever engagement feature 428.

The shackle unit engagement feature 402 may define the leading edge 410 of the support member 400, which extends from a point and increases in diameter along a part of the length of the support member 400 towards the apparatus coupling 404, and then reduces in diameter to define provide a shoulder 408 which defines the locking lever engagement feature 428.

A stop feature 712 may be provided in the shackle unit housing 706 to engage with the support member 400 and is positioned such that it engages with the support member 400 when the support member 400 has travelled along the support member receiving passage 708 at least as far as is required to engage with the locking lever 328.

The locking mechanism 310 may comprise a release mechanism 312 operable to pivot the (or each) locking lever 328 away from engagement with the locking lever engagement feature 428 provided on the support member 400.

As shown in the figures, the locking lever 328 may be pivotably mounted to the shackle unit housing 706 at a pivot point 714. A first end part 330 of the locking lever 328, on one side of the pivot point 714, is provided for engagement with the locking lever engagement feature 428 provided on the support member 400. A second end part 332 of the locking lever 328, on the other side of the pivot point 714, extends radially outwards of the shackle unit housing 706.

In the example shown in the figures the release mechanism 312 comprises a release cable 316 which is looped round, and operable to act on, the second end part 332 of the locking lever 328. Hence the release mechanism 312 is mounted and operable to act on the second end part 332 of the locking lever 328 to pivot the first end part 330 of the locking lever 328 away from engagement with the locking lever engagement feature 428 provided on the support member 400. Put another way, the release cable 316 is mounted and operable to act on the second end part 332 of the locking lever 328 to pivot the first end part 330 of the locking lever 328 away from engagement with the locking lever engagement feature 428 provided on the support member 400.

As shown in figures 13, 14 and figures 17 to 26, a brake unit 800 may be provided on the shackle unit housing 706 to engage with the tether 600.

As shown in the figures, the tether guide feature 228, the brake unit 800 and the free end 602 of the tether 600 may be provided in series.

The brake unit 800 is configured to engage with the tether 600 if tension in the tether 600 between the brake unit 800 and the free end 602 of the tether 600 is below a predetermined value and/or the free end 602 of the tether 600 is released.

The brake unit 800 may be provided as a drop catch mechanism 900. The drop catch mechanism 900 may define a tapered passage 902 through which the tether 600 extends, and a catch member 904 (e.g. a wheel) mounted in, and moveable along, a slot 906 which extends along the tapered passage 902. The tether 600 is located between the catch member 904 and a wall 910 of the tapered passage 902.

The drop catch mechanism 900 is configured such that if the tension in the tether 600 is sufficient to maintain a distance between the catch member 904 and the tether 600, then the tether 600 is free to travel past the catch member 904.

The drop catch mechanism 900 is configured such that if the tension in the tether 600 is below a predetermined value and/or the free end 602 of the tether 600 is released, the tether 600 will engage with the catch member 904 to draw it along the tapered passage 902 with the tether 600 locked against the wall 910 of the drop catch mechanism 900 to thereby lock the tether 600 against the wall 910 of the drop catch mechanism 900. Hence if the tension in the tether 600 is below a predetermined value and/or the free end 602 of the tether 600 is released, the drop catch mechanism 900 will engage with the tether 600 to prevent the support member 400 from moving relative to the shackle unit 700.

There may be provided a method of positioning an engagement unit 200 of a support unit 300 on an anchor 10 using a mount assembly 100 according to the present disclosure. There may be provided a method of operation of a mount assembly 100 according to the present disclosure. In these methods, the mount assembly 100 is first set to the **first configuration** (as shown in figure 9) such that the coupling member 122 is in the **first position** in which it is engageable with the engagement element 202 of the engagement unit (200), and the shuttle 126 is spaced apart from the recess 160. The lever handle 134 of the actuator controller 150 is in the **first orientation** (e.g. located in a mid position) such that full tension is not applied to either of the first control cable 136 or second control cable 138).

The engagement unit 200 is then located in the cradle 106 (as shown in figure 10), with the mount assembly 100 still in the **first configuration.** The engagement element 202 (e.g. wire 206) provided on the engagement unit 200 (e.g. hook) is coupled to the coupling member 122 of the coupling unit 120 (as shown in figure 10).

The mount assembly 100 is then set to the **second configuration** (for example by movement of the shuttle 126 along the shuttle guide path 162 in the second direction D2) to thereby move the coupling member 122 in the first direction D1 to draw the engagement element 202 in the first direction D1 along the operational axis 20 towards the second end 104 and away from the first end 102 to thereby lock the engagement unit 200 against the cradle 106 and fix the latch 204 in the open configuration, and thereby engage the engagement unit 200 with the cradle 106 (as shown in figure 11). The locking member 128 of the shuttle 126 is engaged with the recess 160 and the coupling member 122 is then moved to the **second position** by use of the actuator 130. Hence the locking member 128 being located in the recess 160 allows for second configuration to be carried out. To achieve the second configuration, the lever handle 134 of the actuator controller 150 is in the **second orientation** (rear facing as shown in figure 11) such that the respective control cable 136, 138 is in tension. Tension in the respective control cable 136, 138 may be maintained by the user by keeping hold of the actuator controller 150 through-out the operation. That is to say, moving the lever handle 134 of the actuator controller 150 to the **second orientation** causes the coupling member 122 to move to the **second position** and holds the engagement element 202 in tension, and thereby holds the engagement unit 200 against the cradle 106.

As shown in figure 12, using the arm 140 a user may then lift the cradle 106, the coupling unit 120 and the engagement unit 200 up to where an anchor 10 is located and pass the anchor through the latch space (i.e. opening) on the engagement unit 200 to thereby mount the engagement unit 200 on the anchor 10.

As shown in figure 13, the mount assembly 100 is then set to the **third configuration** to release the engagement element 202 (e.g. wire 206) from the coupling member 122 to thereby release the engagement unit 200 (e.g. hook) from the cradle 106 and return the latch 204 to the closed configuration.

That is the mount assembly 100 is then set to the **third configuration** by use of the actuator 130. That is, the lever handle 134 of the actuator controller 150 is in the **third orientation** (i.e. in a release position, for example facing forwards as shown in figure 13) to release tension in the respective control cable 136, 138 and move the coupling member 122 in the second direction D2 along the operational axis 20 to the third position.

The mount assembly 100 may then be moved away from the engagement unit 200, leaving the engagement unit 200 coupled to the anchor 10.

For dismounting, the coupling member 122 is moved far enough toward the first end 102 to catch on the engagement element 202. The coupling member 122 is positioned on lower side of coupling unit 120 to improve visibility from ground level below. When the engagement element 202 has been captured, the cradle 106 can then be pushed against the rear of the engagement unit 200 to seat correctly into cradle 106. After this, full pressure can be applied through the actuator 130. Before offering coupling unit 120 up to engagement unit 200 and dismounting is carried out, the locking member 128 is located into recess 160. This will prevent unwanted movement of shuttle 126 when actuator 130 is operated. Dismounting is controlled entirely by the actuator 130, due to the first end 102 being at height.

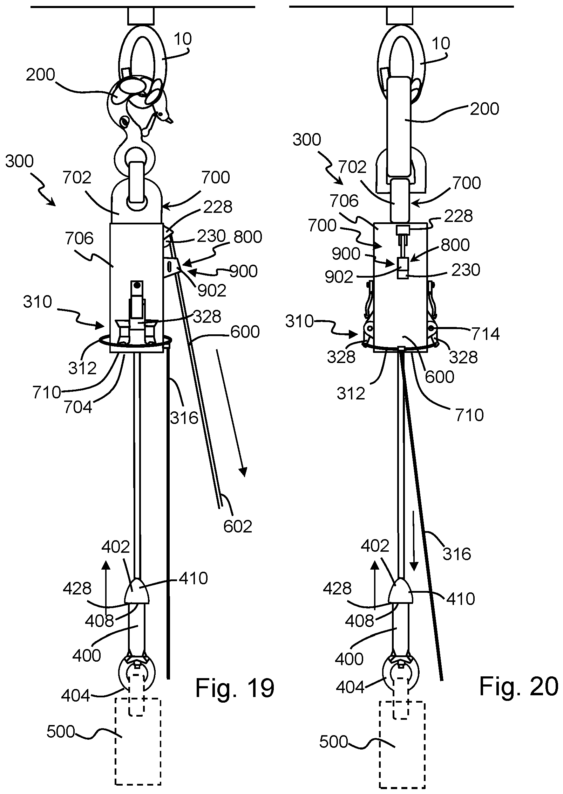

The support unit 300 may be operated as illustrated in figures 19 to 28. Figures 19, 21, 23, 25, 27 show a first side view of the support unit 300, and figures 20, 22, 24, 26, 28 show a second side view of so the support unit 300.

Figures 19, 20 show the support unit 300 in the disengaged configuration in which the support member 400 and the shackle unit 700 are disengaged from one another and spaced apart from one another. The shackle unit 700 is shown coupled to an engagement unit 200 (for example a hook) which is in turn coupled to an anchor 10.

An apparatus 500 (for example a hoist) may be coupled to the apparatus coupling 404 of the support member 400.

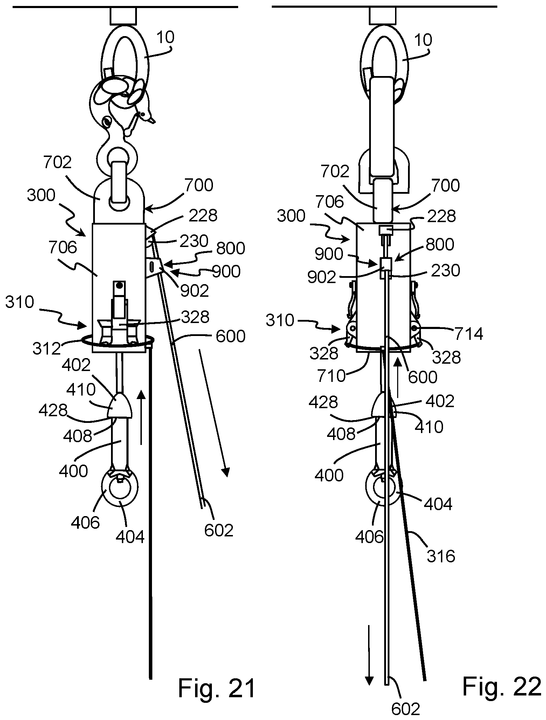

To bring the support member 400 into engagement with the shackle unit 700, the tether 600 is pulled from the free end 602 so as to draw the tether 600 away from the guide feature 228 and thereby draw the support member 400 towards the shackle unit 700 (as shown in figures 21, 22).

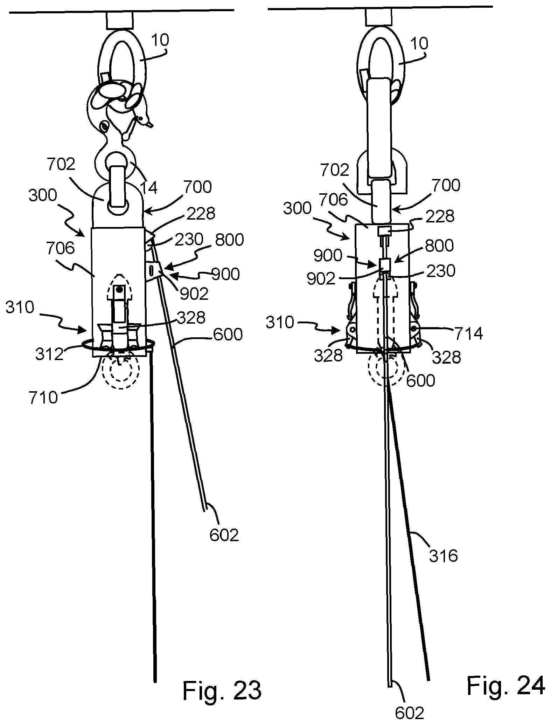

The support member 400 is drawn into the support member receiving passage 708. As the support member 400 is drawn along the support member receiving passage 708 (as shown in figure 17), the leading edge 410 of the support member 400 passes the (or each) locking lever 328, which then engage with the locking lever engagement feature 428 provided on the support member 400 (as shown in figure 18). That is to say, the locking mechanism 310 is operable such that the locking lever 328 engages with the locking lever engagement feature 428 when the support member 400 extends along (i.e. is drawn along) the support member receiving passage 708, to thereby prevent the support member 400 from being disengaged and removed from the shackle unit housing 706. In this way the support member 400 is brought into engagement with, and locked to, the shackle unit 700 such that the support unit 300 is in the engaged configuration (as shown in figures 23, 24).

When in the **engaged configuration** any apparatus 500 connected to the support unit 300 may be operated as required.

When it is required to lower the support member 400 (for example to lower the apparatus 500), then the release mechanism 312 of the locking mechanism 310 is operated to pivot the (or each) locking lever 328 away from engagement with the locking lever engagement feature 428 provided on the support member 400. This is achieved, as shown in figures 23, 24, by drawing down the release cable 316 to act on the second end part 332 of the locking lever 328 to pivot the or each first end part 330 of the locking lever 328 away from engagement with the locking lever engagement feature 428 provided on the support member 400. It may be necessary to first lift the support member 400 relative to the shackle unit 700 by pulling on the tether 600 before pulling on the release cable 316 to pivot the or each locking lever 328.

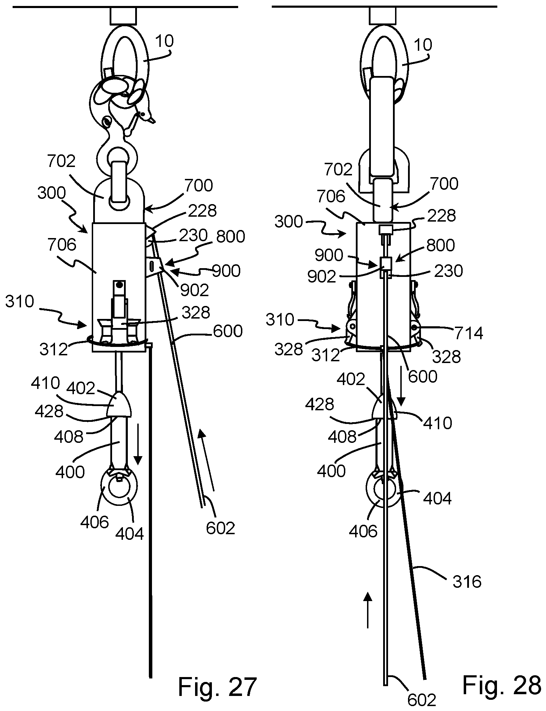

As shown in figures 27, 28, the support member 400 may then be lowered by a user allowing the tether 600 to be slackened and drawn back through the tether guide feature 228 so that the support member 400 may descend relative to the shackle unit 700 with any apparatus 500 attached thereto.

In an example where present, the brake unit 800 is provided on the shackle unit housing 706 to engage with the tether 600, the brake unit 800 configured to engage with the tether 600 if tension in the tether 600 between the brake unit 800 and the free end 602 of the tether 600 drops below a predetermined value and/or the free end 602 of the tether 600 is released.

Hence there is provided apparatus which enables a user to support equipment from a high anchor point (for example at a height above themselves), or dis-engage equipment from a high anchor point, without needing to use a ladder, scaffolding, lifting platform or the like to get close to the anchor. The apparatus of the present disclosure also avoids, or at least minimises, the need for the user to personally support and/or carry the weight of the equipment during the mounting or disengagement process.

The apparatus of the present disclosure allows the process of engaging a hook (i.e. the engagement unit 200, and any additional accessories/equipment coupled to the engagement unit 200 as desired/required, for example the support unit 300) with an anchor point 10 on a building or other support structure by one individual without the means for additional lifting equipment, or for the individual to be raised above the ground.

In an example in which the support unit 300 is coupled to the engagement unit 200, the support unit 300 enables the process of supporting equipment (for example a hoist) from an anchor point 10 or demounting/disengaging the equipment from the anchor point 10 using the support unit 300, by an individual without the means for additional lifting equipment, or for the individual to be raised above the ground.

Hence the use of the mount assembly 100 and/or use of the support unit 300, whether used together or in combination, will reduce time, cost and risk associated with raising and securing equipment at height.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A mount assembly (100) for carrying and positioning an engagement unit (200) of a support unit (300) on an anchor (10), the mount assembly (100) extending between a first end (102) and a second end (104) along an operational axis (20), the first end (102) spaced apart from the second end (104) along the operational axis (20);
a cradle (106) provided at the first end (102) for receiving the engagement unit (200); and
a coupling unit (120) comprising a coupling member (122) for coupling with an engagement element (202) provided on the engagement unit (200),
the mount assembly (100) having a **first configuration** and a **second configuration,** wherein:
in the **first configuration** the coupling unit (120) is operable to receive the engagement unit (200) into the cradle (106) and the coupling member (122) is in a **first position** in which it is engageable with the engagement element (202) of the engagement unit (200), and
in the **second configuration** the coupling member (122) is in a **second position** spaced apart from the **first position** in a first direction (D1) along the operational axis (20) to thereby draw the engagement element (202) in the first direction (D1) along the operational axis (20) towards the second end (104) to thereby lock the engagement unit (200) against the cradle (106).

2. . A mount assembly (100) as claimed in claim 1 wherein the mount assembly (100) has a **third configuration** in which the coupling unit (120) is operable to release the engagement unit (200) from the cradle (106) and the coupling member (122) is at a **third position** spaced apart from the **first position** in a second direction (D2) along the operational axis (20) such that the coupling unit (120) is dis-engageable from the engagement element (202) of the engagement unit (200), the **first position** being between the **second position** and the **third position.**

3. A mount assembly (100) as claimed in claim 1 or claim 2 further comprising an actuator (130), the actuator (130) configured to control the coupling unit (120) to switch between the **different configurations.**

4. A mount assembly (100) as claimed in any one of the preceding claims wherein the coupling member (122) is a hook member (124) configured for coupling with the engagement element (202) provided on the engagement unit (200).

5. A mount assembly (100) as claimed in any one of the preceding claims further comprising an arm (140) which extends from the coupling unit (120) towards the second end (104) along the operational axis (20), and the mount assembly (100) further comprises an actuator controller (150) provided on the arm (140), the actuator controller (150) operable to operate the actuator (130) to control the coupling unit (120) to switch between the **different configurations.**

6. A mount assembly (100) as claimed in claim 5 wherein the arm (140) is extendable and retractable.

7. A mount assembly (100) as claimed in any one of claims 3 to 6 wherein:
the actuator (130) comprises a cable adjuster unit (132) and a lever handle (134) coupled to the cable adjuster unit (132);
a first control cable (136) and a second control cable (138) extend from the cable adjuster unit (132) to the coupling unit (120),
the first control cable (136) and the second control cable (138) being coupled to the coupling member (122) such that when the lever handle (134) is in a **first orientation** the mount assembly (100) is in the **first configuration,** when the lever handle (134) is in a **second orientation** the mount assembly (100) is in the **second configuration,** and when the lever handle (134) is in a **third orientation** the mount assembly (100) is in **third configuration.**

8. A mount assembly (100) in any one of the preceding claims wherein the coupling member (122) is mounted in the coupling unit (120) such that it is moveable along a predefined path along the operational axis (20) between the **first position** and the **second position.**

9. A mount assembly (100) in any one of claims 2 to 8 wherein the coupling member (122) is mounted in the coupling unit (120) such that it is moveable along a predefined path along the operational axis (20) between the **first position** and the **third position.**

10. A mount assembly (100) as claimed in any one of the preceding claims wherein:
the engagement unit (200) comprises a latch (204) which has an **open configuration** and a **closed configuration;**
the engagement element (202) of the engagement unit (200) is a wire (206) which is coupled to the latch (204);
the latch (204) configured such that when the mount assembly (100) is in the **second configuration** the latch (204) is in the **open configuration** to enable the engagement unit (200) to be engaged with the anchor (10) or to be dis-engaged from the anchor (10), and
when the mount assembly (100) is in the **third configuration** the latch (204) is in the **closed configuration** to prevent the engagement unit (200) being dis-engaged with the anchor (10).

11. A mount assembly (100) as claimed in claim 10 wherein the latch (204) is biased to the **closed configuration.**

12. A mount assembly (100) as claimed in any one of claims 1 to 11 wherein:
the coupling unit (120) comprises a shuttle (126) from which extends a locking member (128),
the coupling unit (120) defining a recess (160) for locking engagement with the locking member (128);
the shuttle (126) being constrained to move along a guide path (162) in a direction parallel to the operational axis (20) towards and away from the recess (160);
the locking member (128) being engageable with the recess (160). and
the shuttle (126) being coupled to the coupling member (122) such that when the locking member (128) of the shuttle (126) is engaged with the recess (160) the coupling member (122) is operable to be moved to the **second position;** and
when the mount assembly (100) is in the **first configuration,** the shuttle (126) is spaced apart from the recess (160) along the guide path (162).

13. A method of operation of a mount assembly (100) as claimed in claim 11 or claim 12, comprising the steps of:
setting the mount assembly (100) to the **first configuration;**
locating the engagement unit (200) into the cradle (106);
coupling the engagement element (202) provided on the engagement unit (200) with the coupling member (122);
setting the mount assembly (100) to the **second configuration** to thereby draw the engagement element (202) in the first direction along the operational axis (20) towards the second end (104) to thereby:
a. lock the engagement unit (200) against the cradle (106); and
b. fix the latch (204) in the open configuration;
engaging the engagement unit (200) with the anchor (10);
setting the mount assembly (100) to the **third configuration** to release the engagement element (202) from the coupling member (122) to thereby:
c. release the engagement unit (200) from the cradle (106); and
d. return the latch (204) to the closed configuration.

14. A method as claimed in claim 13 when dependent on claim 11 further comprising the steps of:
the locking member (128) being engaged with the recess (160); and
the coupling member (122) being moved to the **second position.**
